# EUROPÄISCHE PATENTSCHRIFT

(11) **EP 2 703 275 B1**
(45) Veröffentlichungstag und Bekanntmachung des Hinweises auf die Patenterteilung: **06.05.2020**
(21) Anmeldenummer: 13177936.5
(22) Anmeldetag: 25.07.2013
(51) Int. Cl.: B62K 21/26, B62K 23/02, B62M 6/45

(54) **Fahrradgriff**
bicycle handle-bar grip
Poignée de bicyclette

(30) Priorität: 27.08.2012 DE 202012008121 U
(43) Veröffentlichungstag der Anmeldung: 05.03.2014
(73) Patentinhaber: Ergon International GmbH, 56070 Koblenz (DE)
(72) Erfinder: Arnold, Franc, 56068 Koblenz (DE)
(74) Vertreter: dompatent von Kreisler Selting Werner - Partnerschaft von Patent- und Rechtsanwälten mbB

(56) Entgegenhaltungen:
- EP-A2- 1 216 911
- CN-U- 201 597 707
- CN-Y- 2 315 038
- DE-A1- 2 211 656
- DE-A1- 10 143 585
- DE-U1-202004 008 297
- DE-U1-202010 011 987
- US-A1- 2005 023 067

## Beschreibung

Die Erfindung betrifft einen Fahrradgriff zur Befestigung an einem Fahrradlenker.

Bei Fahrrädern mit einem elektrischen Hilfsmotor sind am Lenker Bedienelemente zum Steuern des Elektromotors angeordnet. Diese Bedienelemente sind beispielsweise klemmend am Lenker befestigt. Da es sich um Bedienelemente handelt, die unabhängig von dem Griff sind, können diese seitlich neben einem herkömmlichen Fahrradgriff an dem Lenker befestigt werden. Derartige Bedienelemente weisen den Nachteil auf, dass zur Bedienung häufig die Hand vom Fahrradgriff gelöst werden muss. Zumindest ein teilweises Lösen ist erforderlich, um beispielsweise mit dem Daumen einen Schalter an dem Bedienelement zu betätigen. Hierdurch ist die Sicherheit verringert, da beispielsweise beim Überfahren einer Bodenwelle oder dergleichen die Gefahr besteht, dass die Hand vom Lenker abrutscht. Auch ist die Ergonomie derartiger Bedienelemente nicht oder nur geringfügig auf die Handhaltung des Benutzers während des Fahrradfahrens abgestimmt.

Ein insbesondere ergonomisch ausgestalteter Fahrradgriff ist aus DE 20 2004 008 297, DE 20 2010 011 987 oder CN 201597707 bekannt.

Ferner ist es beispielsweise aus DE 101 43 585 bekannt, ein elektronisches Bauteil in einen Fahrradgriff zu integrieren.

Aufgabe der Erfindung ist es, einen Fahrradgriff zu schaffen, bei dem ein Elektronikelement und/oder ein Sende-/Empfangselement auf sichere Weise integriert ist.

Die Lösung der Aufgabe erfolgt erfindungsgemäß entweder durch die Merkmale des Anspruchs 1, oder durch die Merkmale des Anspruchs 9.

Der erfindungsgemäße Fahrradgriff weist ein Griffelement zum Befestigen an einem Fahrradlenker auf. Zur Verbesserung der Bedienbarkeit sowie zur Verbesserung der ergonomischen Handhaltung ist erfindungsgemäß mindestens einer, vorzugsweise mehrere Schalter in dem Griffelement angeordnet. Die Schalter dienen zum Steuern eines elektrischen Unterstützungsmotors für das Fahrrad. Mit den einzelnen Schaltern kann bspw. der Motor an oder ausgeschaltet werden. Die Drehzahl des Motors bzw. die Stärke der Unterstützung kann variiert werden, ein Modusschalter für ein Display kann vorgesehen sein, ein An-/Ausschalter für das Licht etc. kann vorgesehen sein. Die Schalter sind vorzugsweise an einem Innenbereich des Greifelements, d.h. an dem in Richtung der Fahrradinnenseite weisenden Bereich angeordnet. Hierdurch ist es möglich, die einzelnen Schalter mit dem Daumen und/oder dem Zeigefinger zu betätigen. Hierdurch ist die Sicherheit erhöht, da zum Betätigen der Schalter der Griff vom Benutzer nicht losgelassen werden muss. Die einzelnen Schalter können hierbei am Umfang des Griffes in unterschiedlichen Lagen angeordnet sein, sodass diese mit dem Daumen oder dem Zeigefinger auf einfache Weise betätigbar sind. Bspw. ist ein Schalter zur Steuerung der Unterstützungsstufe des Unterstützungsmotors in einem hinteren unteren Bereich des Innenbereichs des Griffelements angeordnet, sodass dieser im montierten Zustand einfach mit dem Daumen betätigt werden kann. Ein Lichtschalter kann sodann in einem vorderen oder oberen Bereich im Innenbereich des Griffelements angeordnet sein, sodass dieser Schalter der seltener betätigt werden muss, mit dem Zeigefinger betätigt werden kann.

Über die entsprechenden Schalter können bspw. auch die Modi eines Fahrradcomputers bzw. eines Tachos angewählt werden. Entsprechende Funktionen können auch in einem Smartphone integriert sein, sodass die Modi eines Fahrradcomputers in einem Smartphone angezeigt werden.

In einer bevorzugten Ausführungsform der Erfindung ist zumindest ein Teil der Schalter an einer Griffoberseite angeordnet und als Sensorfolie ausgebildet.

Insbesondere zum Steuern der Unterstützungsstufe des Elektromotors ist eine Sensorfolie oder ein Berührungs- bzw. Touchschalter gut geeignet.

Die Verbindung zwischen den Schaltern und den zu schaltenden Bauteilen, wie insbesondere der Steuerelektronik des Motors, kann über Kabel realisiert werden.

Erfindungsgemäß ist ein Elektronikelement zur Steuerung des Unterstützungsmotors innerhalb des Griffelements angeordnet. Das Elektronikelement, das bspw. einen Chip umfasst, kann somit unmittelbar mit den Schaltern verbunden werden. Das Elektronikelement kann sodann mit einem Kabel mit dem Unterstützungsmotor verbunden sein, der sodann lediglich ggf. eine zusätzliche Elektronik aufweisen muss. Anstelle oder zusätzlich zu mindestens einem in dem Griffelement integrierten Elektronikelement kann ein Sende-/Empfangselement in dem Griffelement angeordnet sein. Mithilfe eines derartigen Sende-/Empfangselement kann eine drahtlose Datenübertragung erfolgen. Dies ist bspw. derart möglich, dass das Elektronikelement zur Steuerung des Unterstützungsmotors als gesondertes Bauteil nicht im Griffelement integriert ist und die Datenübertragung drahtlos von dem Sende-/Empfangselement an das Elektronikelement erfolgt.

Besonders bevorzugt ist es, dass sowohl zumindest ein Teil der Elektronik in Form eines Elektronikelements in den Griffelement als auch ein Sende-/Empfangselement in dem Griffelement integriert sind. Hierdurch ist eine einfach bspw. drahtgebundene Kommunikation zwischen dem Schalter und der Elektronik möglich, wobei die entsprechenden Daten sodann mittels des Sende-/Empfangselements an die entsprechenden Bauteile, wie den Unterstützungsmotor übertragen werden.

Erfindungsgemäß weist das Griffelement ein Kernelement aus vorzugsweise härterem Kunststoff auf. Insbesondere ist das Kernelement hülsenförmig ausgebildet. Das Griffelement kann daher ein hülsenförmiges aus härterem Kunststoff hergestelltes Kernelement aufweisen, das von einem Halteelement umgeben ist. Durch das Vorsehen eines härteren Kernelements ist insbesondere eine bessere Befestigung des Fahrradgriffs am Fahrradlenker möglich.

Desweiteren ist es bevorzugt, einen ergonomisch ausgestalteten Fahrradgriff vorzusehen, der zusätzlich ein mit dem Halteelement verbundenes Abstützelement aufweist. Das Abstützelement dient zur Abstützung des Handtellers und ragt in Richtung des Benutzers bei einem montierten Fahrradgriff. Hierdurch kann eine gute Entlastung des Handgelenks realisiert werden. Um insbesondere ein Abknicken des Abstützelements bei größerer Belastung zu vermeiden, weist das Kernelement einen insbesondere flügelförmigen Ansatz auf, der in das Abstützelement ragt. Der Ansatz dient als Skelett, sodass das das Kernelement umgebende Halteelement sowie das Abstützelement aus weichem Kunststoff hergestellt sein können.

Bei dem erfindungsgemäßen Fahrradgriff mit Kernelement ist zumindest ein Teil des Elektronikelements und/oder des Sende-/Empfangselements in dem Kernelement oder dem Ansatz des Kernelements angeordnet. Dies hat den Vorteil, dass die entsprechenden Bauteile geschützt angeordnet sein können und vermieden werden kann, dass zu hoher Druck auf die entsprechenden Elemente vom Benutzer ausgeübt wird. Insbesondere ist es möglich, dass die einzelnen Bauteile, bspw. in das Kernelement eingebettet oder von diesem umspritzt sind.

Eine weitere bevorzugte Ausführungsform des Fahrradgriffs weist zusätzlich ein Klemmelement zum klemmenden Fixieren des Fahrradgriffs am Fahrradlenker auf. Ein bspw. schellenförmig ausgebildetes Klemmelement kann hierbei derart ausgebildet sein, dass es einen hülsenförmigen Teil des Kernelements umgibt, sodass durch die Verformung des Kernelements dieses klemmend am Lenker gehalten ist. Hierzu kann der insbesondere hülsenförmige Teil des Kernelements mindestens einen in Längsrichtung des Fahrradgriffs verlaufenden Klemmschlitz aufweisen. Hierbei ist es möglich, dass das Klemmelement im Wesentlichen ringförmig bzw. schellenartig ausgebildet ist und einen hülsenförmigen Teil des Kernelements umgibt. Zusätzlich kann das Klemmelement mit einem Halteelement, einem sogenannten Barend verbunden sein. Insbesondere ist der Fahrradgriff, wie bspw. in der EP 1 712 460 beschrieben, aufgebaut.

Beim Vorsehen eines Barends ist es in besonders bevorzugter Weiterbildung der Erfindung vorteilhaft einen Teil der Schalter, das ggf. vorgesehene Elektronikelement und/oder das ggf. vorgesehene Sende-/Empfangselement in dem Barend vorzusehen. Insbesondere eine Antenne des Sendeempfangselements kann in dem Barend angeordnet werden. Hierbei ist es bevorzugt, dass zur Vermeidung von Störungen, das Barend aus einem Kunststoffmaterial, wie Karbon hergestellt ist.

Sofern ein Teil der Bauteile innerhalb des Klemmelements und/oder innerhalb des Barends angeordnet ist und ein Teil der Bauteile in dem Kernelement des Fahrradgriffs angeordnet ist, kann ein Steckkontakt vorgesehen, um eine elektrische Verbindung zwischen diesen Bauteilen zu realisieren. Der Steckkontakt kann an einer in Richtung des Kernelements oder des Griffelements weisenden Seite des Klemmelements vorgesehen sein, sodass bei Montage des Klemmelements automatisch ein Steckkontakt verbunden wird.

Desweiteren ist es möglich, anstelle oder zusätzlich zu einem Klemmelement ein vom Griffelement unabhängiges Bedienelement vorzusehen, das bspw. seitlich neben, insbesondere innerhalb des Fahrradgriffs bspw. klemmend am Lenker befestigt ist. Hierbei können Teile der Elektronik, Schalter sowie auch Sende-/Empfangselement in dem Bedienelement und einzelne Teile dieser Bauteile in dem Griffelement angeordnet sein. Die Verbindung kann wiederum mithilfe eines Steckkontaktes erfolgen. Es ist hierbei bspw. vorteilhaft in dem Bedienelement zumindest die Antenne eines Sende-/Empfangselements anzuordnen, sodass die Antenne nicht von der Hand abgedeckt wird. Dies ist auch bei der Anordnung der Antenne im Barend vorteilhaft. Ebenfalls erfolgt die Lösung der Aufgabe erfindungsgemäß durch die Merkmale des Anspruchs 9.

Ferner betrifft die Erfindung ein Fahrrad mit elektrischen Unterstützungs- bzw. Hilfsmotor. Ein derartiger Motor kann beispielsweise als Nabenmotor in die Hinterradnabe integriert sein. Auch kann der Unterstützungsmotor auf die Tretkurbel einwirken, so dass die Unterstützungskraft über die Tretkurbel bzw. die die beiden Tretkurbeln verbindende Achse erfolgt. Ein Energiespeicher, wie ein Akku, ist entweder unmittelbar mit dem Rahmen oder mittelbar beispielsweise mit dem Gepäckträger verbunden. Erfindungsgemäß weist das Fahrrad am Lenker einen Fahrradgriff mit erfindungsgemäß angeordnetem Schalter auf. Der Fahrradgriff ist vorzugsweise wie vorstehend beschrieben erfindungsgemäß weitergebildet.

Nachfolgend wird die Erfindung anhand bevorzugter Ausführungsformen unter Bezugnahme auf die anliegenden Zeichnungen näher erläutert.

Es zeigen:
- Figur 1: eine schematische Draufsicht einer ersten bevorzugten Ausführungsform eines Fahrradgriffs mit Abstützelement und Barend,
- Figur 2: eine schematische Schnittansicht eines Kernelements und
- Figur 3: eine schematische Draufsicht einer weiteren Ausführungsform eines erfindungsgemäßen Fahrradgriffs.

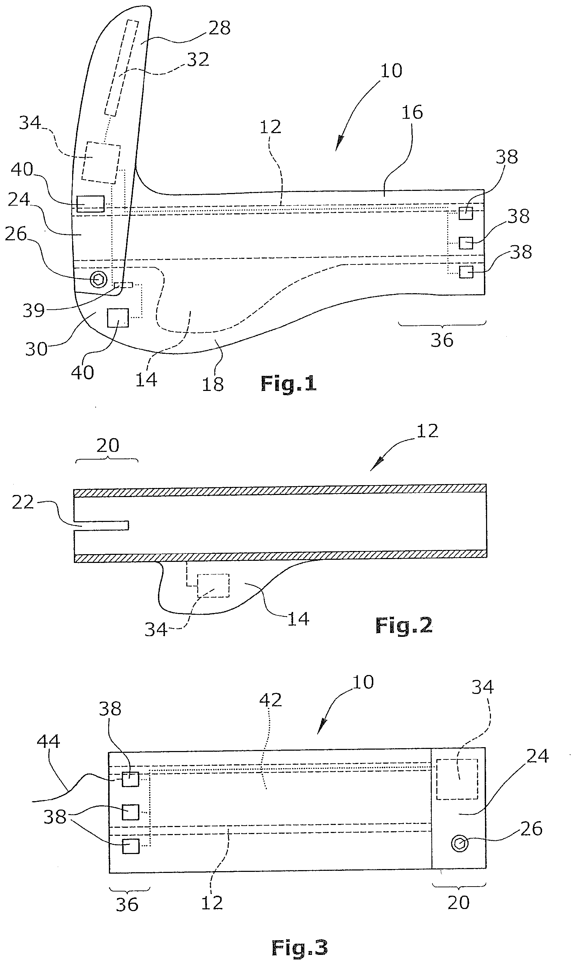

Bei einer ersten bevorzugten Ausführungsform des Fahrradgriffs (Figur 1) umgibt ein Griffelement 10 ein im Inneren angeordnetes Kernelement 12. Das Kernelement 12 ist hülsenförmig ausgebildet, sodass dieses auf einen nicht dargestellten Fahrradlenker aufgesteckt werden kann. Ferner ist mit dem Kernelement 12 ein Ansatz 14 verbunden. Der Ansatz 14 ist flügelförmig ausgebildet und dient als eine Art Skelett. Der Ansatz 14 ist insofern von einem Halteteil 16 sowie einem Abstützelement 18 des Griffelements 10 umgeben. Hierbei ist das Kernelement 12 vorzugsweise aus härterem Kunststoff als das Griffelement 10 hergestellt. Das Kernelement 12 ragt auf der in Figur 1 linken Seite über das Griffelelement 10 hinaus, sodass ein hülsenförmiger Teil des Kernelements einen Klemmbereich 20 ausbildet. In diesem Klemmbereich 20 ist das Kernelement vorzugsweise geschlitzt, sodass ein Klemmschlitz 22 vorgesehen ist. Der Klemmbereich 20 ist von einem Klemmelement 24 umgeben. Das schellenartige Klemmelement kann mithilfe einer Schraube oder eines Fixierelements 26 im Durchmesser verringert werden, sodass ein klemmendes Fixieren des Fahrradgriffs im Klemmbereich 20 des Kernelements 12 auf dem Fahrradlenker erfolgt. Im dargestellten Ausführungsbeispiel ist das Klemmelement 24 mit einem Barend 28 verbunden, bzw. einstückig mit diesem ausgebildet. Desweiteren weist das Griffelement 10 in dieser Ausführungsform, insbesondere das Abstützelement 18 des Griffelements 10 einen in den Klemmbereich ragenden Ansatz 30 auf. Hierdurch ist die Ergonomie insofern verbessert, dass der Fahrradgriff auf einfache Weise in einer herkömmlichen Stellung aber auch am Barend ergonomisch gehalten werden kann.

In der dargestellten Ausführungsform ist ein Sende-/Empfangselement 32, insbesondere eine Antenne des Sende-/Empfangselement 32 innerhalb des vorzugsweise aus Kunststoff hergestellten Barends 28 angeordnet. Hierdurch ist ein Verdecken der Antenne durch die Hand vermieden. Ein Verdecken durch die Hand erfolgt selten, da das Barend weniger häufig gegriffen wird. Ferner wird das Barend beim Betätigen der Schalter üblicherweise aufgrund der Anordnung der Schalter nicht gegriffen.

In der dargestellten Ausführungsform sind Bauteile eines Elektronikelements 34 sowohl in dem Barend 28 bzw. im Übergangsbereich zwischen dem Barend 28 und dem Klemmelement 24 als auch in dem Ansatz 14 angeordnet. Insbesondere können die Bauteile 32,34 von dem Barend 28 bzw. dem Ansatz 14 umschlossen bzw. eingegossen sein. Eine elektrische Verbindung wird durch ein Kontaktelement 39 hergestellt.

Desweiteren sind bspw. in einem Innenbereich 36 Schalter 38 angeordnet. Die in diesem Bereich angeordneten Schalter 38 sind auf einfache Weise mit dem Daumen zugänglich, da es sich bei dem in den Figuren 1 und 2 dargestellten Fahrradgriff um einen linken Fahrradgriff handelt. Zusätzlich können Schalter 40, die insbesondere selten bedient werden müssen, auch in dem Ansatz 30 sowie an dem Klemmelement 24 vorgesehen sein.

Bei dem in den Figuren 1 und 2 dargestellten Ausführungsbeispiel handelt es sich aufgrund des Vorsehens einer Sende-/Empfangseinrichtung 32 um einen Fahrradgriff, in dem insofern sämtlich Elektronikelemente integriert sind und ferner eine drahtlose Kommunikation erfolgt.

Bei einem weiteren Ausführungsbeispiel (Figur 3), bei dem es sich um eine einfachere Ausgestaltung eines rechten Fahrradgriffs handelt, sind ähnliche und identische Bauteile mit denselben Bezugszeichen gekennzeichnet.

Der Fahrradgriff weist in dieser Ausführungsform ebenfalls ein Greifelement 10 auf, das ein hülsenförmiges Kernelement 12 umgibt. Dieses weist keinen flügelförmigen Ansatz auf, da es sich bei dem in Figur 3 dargestellten Griff um einen im Wesentlichen zylindrisch ausgestalteten Griff handelt. Das hülsenförmige Kernelement 12 weist auf der in Figur 3 rechten Seite 20 wiederum einen Klemmbereich auf, wobei die Hülse 12 in diesem Bereich geschlitzt ausgebildet ist. Das Klemmen des Fahrradgriffs erfolgt über ein Klemmelement 24. In dem Klemmelement 24 ist im dargestellten Ausführungsbeispiel ein Elektronikelement 34 integriert. Dies ist über ein oder mehrere Kabel 42 mit Schaltern 38 verbunden. Die Schalter 38 sind auch in diesem Ausführungsbeispiel in dem Innenbereich 36 des Fahrradgriffs angeordnet, sodass diese einfach mit dem Daumen oder Zeigefinger bedient werden können. In dem in Figur 3 dargestellten Ausführungsbeispiel weist der Fahrradgriff kein Sende-/Empfangselement auf. Die entsprechenden Daten werden über ein Kabel 44 an einen Unterstützungsmotor, an einem Fahrradtacho und dergleichen übertragen.

## Patentansprüche

1. Fahrradgriff mit
einem auf einen Fahrradlenker befestigbaren Griffelement (10),
wobei das Griffelement (10) ein hülsenförmiges Kernelement (12) aus härterem Kunststoff als ein das Kernelement (12) umgebendes Halteelement (16) des Griffelements (10) aufweist, und
wobei das Kernelement einen insbesondere flügelförmigen Ansatz (14) aufweist, der in ein mit dem Halteelement (16) verbundenes Abstützelement (18) ragt,
**dadurch gekennzeichnet, dass**
in dem Griffelement (10) mindestens ein elektrischer Schalter (38) zum Steuern eines elektrischen Unterstützungsmotors angeordnet ist,
der mindestens eine elektrische Schalter (38) mit einem innerhalb des Griffelements (10) angeordneten Elektronikelement (34) zur Steuerung des Unterstützungsmotors und/oder einem innerhalb des Griffelements (10) angeordneten Sende-/Empfangselement (32) zur drahtlosen Datenübertragung verbunden ist, und
das Elektronikelement (34) und/oder das Sende-/Empfangselement (32) zumindest teilweise innerhalb des Kernelements (12) und/oder des Ansatzes (14) des Kernelements (12) angeordnet ist.

2. Fahrradgriff nach Anspruch 1, **dadurch gekennzeichnet, dass** der mindestens eine elektrische Schalter (38) an einem Innenbereich (36) des Griffelements (10) angeordnet ist.

3. Fahrradgriff nach Anspruch 1 oder 2, **dadurch gekennzeichnet, dass** der mindestens eine elektrische Schalter (38) zumindest teilweise als an einer Griffoberseite angeordnete Sensorfolie ausgebildet ist.

4. Fahrradgriff nach einem der Ansprüche 1 bis 3, **gekennzeichnet durch** ein Klemmelement (24) zum klemmenden Fixieren des Fahrradgriffs am Fahrradlenker.

5. Fahrradgriff nach Anspruch 4, **dadurch gekennzeichnet, dass** das Klemmelement (24) mit dem hülsenförmigen Kernelement (12) zusammenwirkt.

6. Fahrradgriff nach Anspruch 5, **dadurch gekennzeichnet, dass** das Klemmelement (24) mit einem Barend (28) verbunden, insbesondere einstückig mit diesem ausgebildet ist.

7. Fahrradgriff nach einem der Ansprüche 4 bis 6, **dadurch gekennzeichnet, dass** der mindestens eine elektrische Schalter (38), das Elektronikelement (34) und/oder das Sende-/Empfangselement (32) zumindest teilweise in dem Klemmelement (24) zusätzlich deren Anordnung im Kernelement (12) und/oder im Ansatz (14) des Kernelements (12) integriert sind.

8. Fahrrad mit elektrischem Unterstützungsmotor und einem am Fahrradlenker angeordneten Fahrradgriff mit Schalter (38) zum Steuern des elektrischen Unterstützungsmotors nach einem der Ansprüche 1 bis 7.

9. Fahrradgriff mit einem auf einen Fahrradlenker befestigbaren Griffelement (10), und mindestens ein in dem Griffelement (10) angeordneter elektrischer Schalter (38) zum Steuern eines elektrischen Unterstützungsmotors,
**dadurch gekennzeichnet, dass**
der Fahrradgriff ein Klemmelement (24) zum klemmenden Fixieren des Fahrradgriffs am Fahrradlenker aufweist, und
ein Elektronikelement (34) zur Steuerung des Unterstützungsmotors, das zumindest teilweise in dem Klemmelement (24) integriert ist.

## Claims

1. A bicycle handle grip, comprising
a grip element (10) for attachment to a bicycle handlebar,
wherein the grip element (10) includes a sleeve-shaped core element (12), which is made of a harder plastic, as a holding element (16) of the grip element (10) surrounding the core element (12), and
wherein the core element comprises a particularly wing-shaped lug (14) protruding into a support element (18) connected to the holding element (16),
**characterized in that**
at least one electric switch (38) for controlling an electric auxiliary motor is arranged in the grip element (10),
the at least one electric switch (38) is connected to an electronic element (34) being arranged within the grip element (10) for controlling the auxiliary motor and/or to a transmitter/receiver element (32) arranged within the grip element (10) for wireless data transmission, and
the electronic element (34) and/or the transmitter/receiver element (32) are at least partially arranged within the core element (12) and/or the lug (14) of the core element (12).

2. The bicycle handle grip according to claim 1, **characterized in that** the at least one electric switch (38) is arranged at an interior (36) of the grip element (10).

3. The bicycle handle grip according to claim 1 or 2, **characterized in that** the at least one electric switch (38) is at least partially configured as a sensor foil being arranged on the top side of the grip.

4. The bicycle handle grip according to any one of claims 1 to 3, **characterized by** a clamping element (24) for fixing the bicycle handle grip to the bicycle handlebar in a clamping manner.

5. The bicycle handle grip according to claim 4, **characterized in that** the clamping element (24) cooperates with the sleeve-shaped core element (12).

6. The bicycle handle grip according to claim 5, **characterized in that** the clamping element (24) is connected to a bar end (28) and in particular integrally formed therewith.

7. The bicycle handle grip according to one of claims 4 to 6, **characterized in that** the at least one electric switch (38), the electronic element (34) and/or the transmitter/receiver element (32) are at least partially integrated into the clamping element (24) in addition to their arrangement in the core element (12) and/or in the lug (14) of the core element (12).

8. A bicycle comprising an electric auxiliary motor and a bicycle handle grip which is arranged on the bicycle handlebar and includes a switch (38) for controlling the electric auxiliary motor according to one of claims 1 to 7.

9. A bicycle handle grip, comprising
a grip element (10) for attachment to a bicycle handlebar, and
at least on electric switch (38) arranged in the grip element (10) for controlling the electric auxiliary motor,
**characterized in that**
the bicycle handle grip comprises a clamping element (24) for fixing the bicycle handle grip to the bicycle handlebar in a clamping manner, and
an electronic element (34) is integrated at least partially into the clamping element (24) for controlling the auxiliary motor.

## Revendications

1. Poignée de bicyclette dotée
d'un élément de poignée (10) pouvant être fixé sur un guidon de bicyclette,
dans laquelle l'élément de poignée (10) comporte un élément de noyau en forme de gaine (12) en matière plastique dure comme un élément de maintien (16) de l'élément de poignée (10), entourant l'élément de noyau (12), et
dans laquelle l'élément de noyau (12) comporte un appendice (14), en particulier en forme d'aile, lequel saillit dans un élément de support (18) relié à l'élément de maintien (16),
**caractérisée en ce que**
au moins un commutateur électrique (38) est agencé dans l'élément de poignée (10) pour commander un moteur d'assistance électrique,
l'au moins un commutateur électrique (38) est raccordé à un élément électronique (34) agencé à l'intérieur de l'élément de poignée (10) afin de commander le moteur d'assistance électrique et/ou à un élément émetteur/récepteur (32) agencé à l'intérieur de l'élément de poignée (10) pour la transmission de données sans fil, et
l'élément électronique (34) et/ou l'élément émetteur/récepteur (32) est agencé au moins partiellement à l'intérieur de l'élément de noyau (12) et/ou de l'appendice (14) de l'élément de noyau (12).

2. Poignée de bicyclette selon la revendication 1, **caractérisée en ce que** l'au moins un commutateur électrique (38) est agencé sur une zone intérieure (36) de l'élément de poignée (10).

3. Poignée de bicyclette selon la revendication 1 ou 2, **caractérisée en ce que** l'au moins un commutateur électrique (38) est réalisé au moins partiellement comme un film capteur agencé sur une face supérieure de poignée.

4. Poignée de bicyclette selon l'une des revendications 1 à 3, **caractérisée par** un élément de serrage(24) permettant la fixation par serrage de la poignée de bicyclette au guidon de bicyclette.

5. Poignée de bicyclette selon la revendication 4, **caractérisé en ce que** l'élément de serrage (24) coopère avec l'élément de noyau en forme de gaine (12).

6. Poignée de bicyclette selon la revendication 5, **caractérisé en ce que** l'élément de serrage (24) est relié à une corne de guidon (28), en particulier réalisé d'une pièce avec celle-ci.

7. Poignée de bicyclette selon l'une des revendications 4 à 6, **caractérisée en ce que** l'au moins un commutateur électrique (38), l'élément électronique (34) et/ou l'élément émetteur/récepteur (32) sont intégrés au moins en partie dans l'élément de serrage (24) outre leur agencement dans l'élément de noyau (12) et/ou de l'appendice (14) de l'élément de noyau (12).

8. Bicyclette dotée d'un moteur d'assistance électrique et d'une poignée de bicyclette agencée sur le guidon de bicyclette dotée d'un commutateur (38) permettant de commander le moteur d'assistance électrique selon l'une des revendications 1 à 7.

9. Poignée de bicyclette dotée
d'un élément de poignée (10) pouvant être fixé sur un guidon de bicyclette, et
d'au moins un commutateur électrique (38) agencé dans l'élément de poignée (10) pour commander un moteur d'assistance électrique,
**caractérisée en ce que**
la poignée de bicyclette comporte un élément de serrage (24) permettant la fixation par serrage de la poignée de bicyclette au guidon de bicyclette, et
un élément électronique (34) agencé au moins en partie dans l'élément de serrage (24) pour commander le moteur d'assistance électrique.
